# EUROPÄISCHE PATENTSCHRIFT

(11) **EP 2 803 399 B1**
(45) Veröffentlichungstag und Bekanntmachung des Hinweises auf die Patenterteilung: **14.06.2017**
(21) Anmeldenummer: 14166187.6
(22) Anmeldetag: 28.04.2014
(51) Int. Cl.: B01D 35/153, B01D 35/16, B01D 29/90

(54) **Flüssigkeitsfilter**
Fluid Filter
Filtre de liquide

(30) Priorität: 15.05.2013 DE 102013208977
(43) Veröffentlichungstag der Anmeldung: 19.11.2014
(73) Patentinhaber: Mahle International GmbH, 70376 Stuttgart (DE)
(72) Erfinder: Genc, Engin, 71332 Waiblingen (DE); Humljan, Nadja, 71229 Leonberg (DE)
(74) Vertreter: BRP Renaud & Partner mbB Rechtsanwälte Patentanwälte Steuerberater

(56) Entgegenhaltungen:
- EP-A2- 0 289 444
- DE-A1- 19 951 085

## Beschreibung

Die vorliegende Erfindung betrifft ein Flüssigkeitsfilter, insbesondere ein Ölfilter zum Reinigen von Schmieröl für Verbrennungsmotoren von Kraftfahrzeugen, gemäß dem Oberbegriff des Anspruchs 1.

Aus der EP 1 229 985 B1 ist ein gattungsgemäßes Flüssigkeitsfilter mit einem im Einbauzustand im Wesentlichen stehend angeordneten Filtergehäuse bekannt, das einen Aufnahmeraum für ein darin eingesetztes Ringfilterelement zum Filtern einer Flüssigkeit enthält. Das Ringfilterelement weist dabei an seiner unteren Endscheibe einen exzentrischen und axial abstehenden Zapfen auf, der bei montiertem Ringfilterelement dichtend in einen Leerlaufkanal des Filtergehäuses eingreift. Wird das Ringfilterelement zur Wartung ausgetauscht, wird es aus dem Filtergehäuse herausgezogen, so dass durch Entfernen des Zapfens aus dem Leerlaufkanal das Filtergehäuse leer laufen kann und dadurch eine Kontamination der Umgebung vermeidbar ist.

Aus der EP 0 289 444 A2 ist eine Strömungsleitkontur bekannt, die insbesondere eine Vergleichmäßigung der strömenden Flüssigkeit bewirkt. Hierbei soll die zu filternde Flüssigkeit in einer vordefinierten Position des Verteilorgans in das Kopfelement über den Einlassrohrstutzen eintreten und unter Durchquerung der Ausnehmung des Verteilers in den Durchlass des Elements gelangen. Anschließend durchquert es die Beschaufelung, welche ihr eine verwirbelnde Bewegung verleiht.

Nachteilig bei bekannten Flüssigkeitsfiltern ist oftmals die vergleichsweise hohe Druckdifferenz im Flüssigkeitsfilter, die nicht nur durch ein Filtermaterial bestimmt wird, sondern zusätzlich auch durch ein zum Teil ungünstiges Strömungsverhalten der zu reinigenden Flüssigkeit innerhalb des Flüssigkeitsfilters.

Die vorliegende Erfindung beschäftigt sich daher mit dem Problem, für ein Flüssigkeitsfilter der gattungsgemäßen Art eine verbesserte Ausführungsform anzugeben, die sich insbesondere durch eine geringere Druckdifferenz auszeichnet.

Dieses Problem wird erfindungsgemäß durch den Gegenstand des unabhängigen Anspruchs 1 gelöst. Vorteilhafte Ausführungsformen sind Gegenstand der abhängigen Ansprüche.

Die vorliegende Erfindung beruht auf dem allgemeinen Gedanken, eine Strömungsleitstruktur innerhalb des Filtergehäuses eines Flüssigkeitsfilters anzuordnen, welche nicht nur eine Vergleichmäßigung der Strömung innerhalb des Flüssigkeitsfilters bewirkt, sondern zusätzlich auch eine verbesserte Strömung der Flüssigkeit innerhalb des Filtergehäuses ermöglicht, was zu einer Reduzierung der Druckdifferenz führt. Das erfindungsgemäße Flüssigkeitsfilter, welches beispielsweise als ein Ölfilter zum Reinigen von Schmieröl für Verbrennungsmotoren von Kraftfahrzeugen ausgebildet ist, besitzt dabei ein Filtergehäuse mit einem Aufnahmeraum für ein darin eingesetztes Ringfilterelement zum Filtern der Flüssigkeit. Das Ringfilterelement besitzt an seiner unteren Endscheibe einen parallel zur Längsachse und exzentrisch abstehenden Zapfen, der bei in das Filtergehäuse eingesetztem Ringfilterelement dichtend in eine Öffnung eines Leerlaufkanals eindringt. Erfindungsgemäß ist nun im Filtergehäuse im Bereich der unteren Endscheibe des Ringfilterelements die zuvor erwähnte Strömungsleitstruktur angeordnet, die im Betrieb des Flüssigkeitsfilters eine Druckdifferenz in demselben reduziert und zugleich eine Vergleichmäßigung der strömenden Flüssigkeit bewirkt. Hierdurch kann insbesondere auch eine erleichterte und verbesserte Ausströmung aus dem Flüssigkeitsfilter erreicht werden. Die Strömungsleitstruktur kann dabei in beliebiger Form ausgebildet sein und weist beispielsweise einzelne Strömungsleitstrukturen auf, die eine gezielte und widerstandsarme Strömung der Flüssigkeit innerhalb des Filtergehäuses ermöglichen. Erfindungsgemäß weist die Strömungsleitstruktur eine komplementär zum Leerlaufkanal des Filtergehäuses ausgebildete Öffnung auf, mittels welcher sie auf diesen Leerlaufkanal aufsteckbar ist. In diesem Fall kann auf Positionierhilfen in Form von Positionierpins bzw. Positionieröffnungen gänzlich verzichtet werden, da die Öffnung für den Leerlaufkanal bereits ausreicht, um die Strömungsleitstruktur exakt innerhalb des Filtergehäuses positionieren zu können.

Bei einer vorteilhaften Weiterbildung der erfindungsgemäßen Lösung ist die Strömungsleitstruktur einstückig mit dem Filtergehäuse oder separat zu diesem ausgebildet und kann in diesem Fall in das Filtergehäuse eingesetzt werden. Die einstückige Ausbildung der Strömungsleitstruktur mit dem Filtergehäuse bietet den großen Vorteil, dass diese in einem einzigen Arbeitsschritt zusammen mit dem Filtergehäuse, beispielsweise in einem Kunststoffspritzgussverfahren, hergestellt werden kann. Wird hingegen die Strömungsleitstruktur als separates Bauteil ausgebildet, bietet dies den großen Vorteil, dass auch herkömmliche Flüssigkeitsfilter mit der erfindungsgemäßen Strömungsleitstruktur nachgerüstet und dadurch deren Druckdifferenz verringert und das Strömungsverhalten verbessert werden können. Die Strömungsleitstruktur kann bei einer separaten Ausbildung beispielsweise aus Metall oder aus Kunststoff, insbesondere als Kunststoffspritzgussteil, ausgebildet sein. In diesem Fall wird die Strömungsleitstruktur vor dem Einsetzen des Ringfilterelements in das Filtergehäuse eingesteckt und mit diesem verbunden, beispielsweise verclippst oder verschweißt.

Zweckmäßig sind am Filtergehäuse Positionierpins angeordnet, die in zugehörige Positionieröffnungen der Strömungsleitstruktur einsteckbar sind und dadurch eine vordefinierte Lage der Strömungsleitstruktur im Filtergehäuse erzwingen. Derartige Positionierhilfen ermöglichen eine deutlich vereinfachte Montage der Strömungsleitstruktur im Filtergehäuse, wobei diese Positionierhilfen zugleich sicher stellen, dass die Strömungsleitstruktur nur in einer einzigen möglichen Stellung eingebaut werden kann. Selbstverständlich können in analoger Weise die Positionierpins auch an der Strömungsleitstruktur und die zugehörigen Positionieröffnungen am Filtergehäuse vorgesehen werden. Aufgrund der zylindrischen Ausbildung des Filtergehäuses reichen dabei bereits ein einziger Positionierpin und eine einzige zugehörige Positionieröffnung aus, um die Strömungsleitstruktur einfach und zugleich passgenau montieren zu können.

Zweckmäßig weist die Strömungsleitstruktur Rippen auf, die sich in Radialrichtung des Filtergehäuses erstrecken. Diese Rippen können beispielsweise als Strömungsleitstrukturen ausgebildet und dadurch in der Form von Flügeln ausgestaltet sein. Ein Umfangsabstand der sich in Radialrichtung erstreckenden Rippen kann dabei variieren, insbesondere um bereichsspezifische Strömungen innerhalb des Filtergehäuses zu erzwingen. Alternativ hierzu kann die Strömungsleitstruktur selbstverständlich auch kreisförmige Öffnungen aufweisen, die ringförmig angeordnet sind. Einer dieser kreisförmigen Öffnungen ist dabei komplementär zum Leerlaufkanal ausgebildet und kann somit auf diesen aufgesteckt werden. Die kreisförmigen Öffnungen stellen dabei kurze Kanalabschnitte dar, deren Kanalwände derart geformt bzw. ausgerichtet sind, dass sie die gewünschte Strömung der Flüssigkeit innerhalb des Filtergehäuses bewirken.

Die vorliegende Erfindung beruht weiter auf dem allgemeinen Gedanken, eine Strömungsleitstruktur für ein solches Flüssigkeitsfilter bereitzustellen, um eine Druckdifferenz innerhalb des Flüssigkeitsfilters reduzieren und dadurch den Strömungswiderstand verringern zu können. Die Strömungsleitstruktur ist dabei aus Metall oder aus Kunststoff ausgebildet und weist eine komplementär zum Leerlaufkanal des Filtergehäuses ausgebildete Öffnung auf, mittels welcher sie auf diesem Leerlaufkanal aufsteckbar ist. "Aufsteckbar" bedeutet in diesem Falle selbstverständlich auch, dass an der Strömungsleitstruktur eine Passstruktur angeordnet sein kann, die in irgendeiner Weise mit einer am Leerlaufkanal angeordneten Gegenpassstruktur derart zusammenwirkt, dass die Öffnung in der Strömungsleitstruktur im Wesentlichen fluchtend zum Leerlaufkanal ausgerichtet ist und dadurch die Strömungsleitstruktur eine vordefinierte Lage im Filtergehäuse einnimmt. Eine derartige Strömungsleitstruktur kann beispielsweise als kostengünstiges Kunststoffspritzgussteil ausgebildet sein, aber auch aus Metall, wobei in beiden Fällen ein Nachrüsten herkömmlicher Flüssigkeitsfilter durch Einlegen der Strömungsleitstruktur möglich ist.

Weitere wichtige Merkmale und Vorteile der erfindungsgemäßen Vorrichtung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert.

Dabei zeigen, jeweils schematisch,
- Fig. 1: eine Schnittdarstellung durch ein erfindungsgemäßes Flüssigkeitsfilter im Bereich einer Strömungsleitstruktur,
- Fig. 2a-c: unterschiedliche Strömungsleitstrukturen, die vorzugsweise einstückig mit dem Filtergehäuse verbunden sind,
- Fig. 3 und 4: unterschiedliche Strömungsleitstrukturen als Einwegeteil in einem Gehäuse des Flüssigkeitsfilters,
- Fig. 5a, b: weitere Möglichkeiten einer möglichen Ausführungsform der Strömungsleitstruktur.

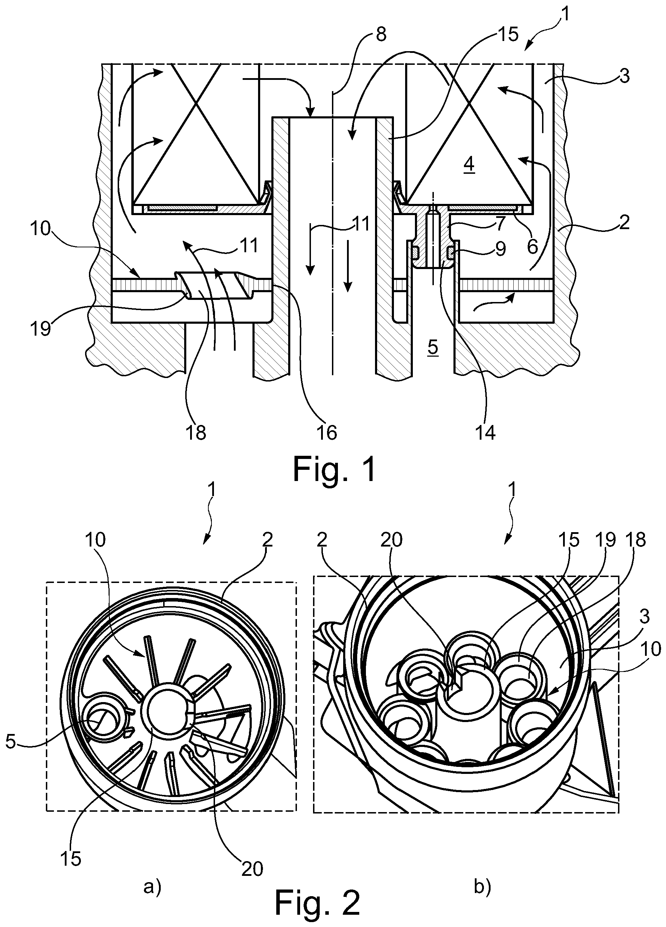

Entsprechend der Figur 1, weist ein erfindungsgemäßes Flüssigkeitsfilter 1 ein Filtergehäuse 2 auf, das einen Aufnahmeraum 3 für ein darin eingesetztes Ringfilterelement 4 zum Filtern einer Flüssigkeit 11, beispielsweise Öl, enthält. Ebenfalls im Filtergehäuse 2 angeordnet ist ein Leerlaufkanal 5, wobei an einer unteren Endscheibe 6 des Ringfilterelements 4 ein parallel zur Längsachse 8 und exzentrisch abstehender Zapfen 7 angeformt ist, der bei in das Filtergehäuse 2 eingesetztem Ringfilterelement 4 dichtend in eine Öffnung des Leerlaufkanals 5 eindringt. Zum Abdichten des Zapfens 7 im Leerlaufkanal 5 weist dieser in bekannter Weise eine Ringdichtung 9 auf. Erfindungsgemäß ist nun im Filtergehäuse 2 im Bereich der unteren Endscheibe 6 des Ringfilterelementes 4 eine Strömungsleitstruktur 10 angeordnet, die beim Betrieb des Flüssigkeitsfilters 1 eine Druckdifferenz in demselben reduziert und zudem eine Vergleichmäßigung der strömenden Flüssigkeit 11 bewirkt. Darüber hinaus kann die Strömungsleitstruktur 10 den Strömungswiderstand innerhalb des Flüssigkeitsfilters 1 durch eine gezielte Lenkung der Flüssigkeit 11 reduzieren.

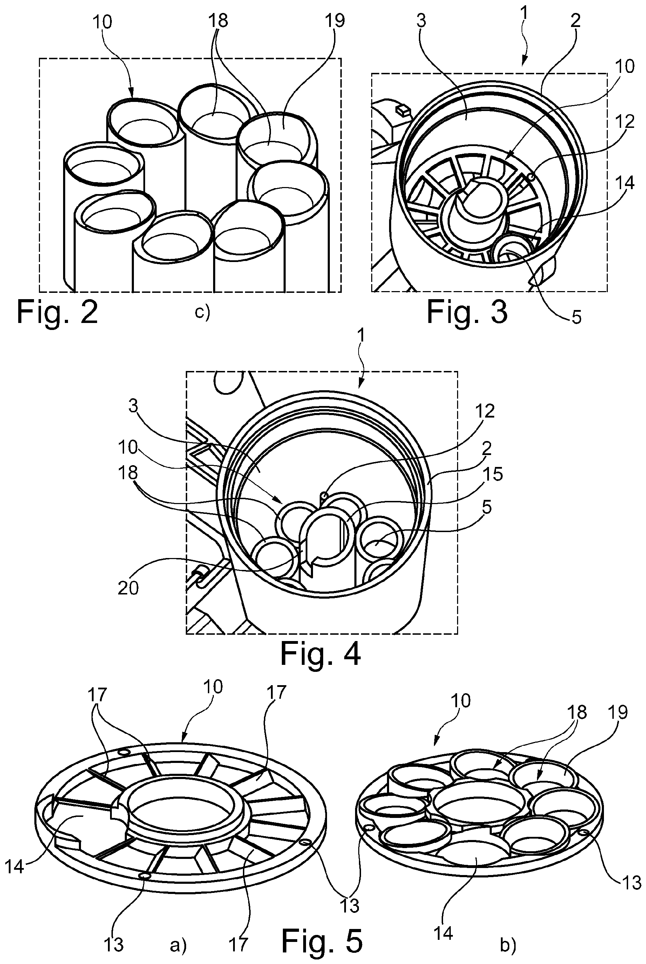

Betrachtet man dabei die Figuren 2a und 2b, so kann man erkennen, dass die Strömungsleitstruktur 10 beispielsweise einstückig mit dem Filtergehäuse 2 ausgebildet und dadurch kostengünstig durch eine einfache Änderung eines Spritzgusswerkzeugs zusammen mit dem Filtergehäuse 2 hergestellt werden kann. Alternativ hierzu kann die Strömungsleitstruktur 10, wie dies gemäß den Figuren 2c bis 5 dargestellt ist, auch als separates Bauteil ausgebildet werden, welches später in das Filtergehäuse 2 eingesetzt wird. Bei der Ausbildung als separates Bauteil kann die Strömungsleitstruktur 10 später mit dem Filtergehäuse 2 verbunden, insbesondere verpresst, verclippst oder verschweißt werden. Dabei ist beispielsweise denkbar, dass im Filtergehäuse 2 Positionierpins 12 (vergleiche Figur 3) angeordnet sind, die in zugehörige Positionieröffnungen 13 der Strömungsleitstruktur 10 einsteckbar sind und dadurch eine vordefinierte Lage der Strömungsleitstruktur 10 im Filtergehäuse 2 erzwingen. Selbstverständlich können derartige Positionierpins 12 auch in der Strömungsleitstruktur 10 angeordnet sein, wobei in diesem Fall dann die zugehörigen Positionieröffnungen 13 am Filtergehäuse 2 angeordnet sind.

Betrachtet man beispielsweise die Figuren 1 sowie 3-5, kann man erkennen, dass die Strömungsleitstruktur 10 eine komplementär zum Leerlaufkanal 5 ausgebildete Öffnung 14 aufweist, mittels welcher sie auf den Leerlaufkanal 5 aufsteckbar ist. Die Öffnung 14 reicht dabei bereits aus, um die Strömungsleitstruktur 10 zusammen mit einem Mitteldom 15 exakt im Filtergehäuse 2 zu positionieren. Die Strömungsleitstruktur 10 wird somit mit ihrer Öffnung 14 über den Leerlaufkanal 5 und mit einer weiteren Öffnung 16 über den Mitteldom 15 gestülpt. In diesem Fall können zusätzlich vorgesehene Positionierpins 12 lediglich zur Abstützung der Strömungsleitstruktur 10 benutzt werden.

Betrachtet man die Strömungsleitstrukturen 10 gemäß den Figuren 2a und 3, so kann man erkennen, dass diese Rippen 17 aufweisen, welche sich in Radialrichtung erstrecken. Diese Rippen 17 (vergleiche auch Figur 5a) können in der Art von Strömungsleitelementen beispielsweise geneigt angeordnet sein und dadurch eine Vergleichmäßigung der Flüssigkeit und somit nicht nur eine verbesserte Filterwirkung, sondern auch einen Abbau des Strömungswiderstandes bewirken. Ein Umfangsabstand der sich in Radialrichtung erstreckenden Rippen 17 kann dabei variieren (vergleiche Figur 5a), wodurch insbesondere bereichsbegrenzte spezifische Strömungsverhältnisse erreichbar sind und zugleich der Einsatz von ungeeigneten Ringfilterelementen 4 verhindert werden kann.

Alternativ zu der Ausführungsform der Strömungsleitstruktur 10 mit den Rippen 17, kann die Strömungsleitstruktur 10 auch kreisförmige Öffnungen 18 aufweisen (vergleiche die Figuren 2b, 2c, 4 und 5b), die ringförmig um den Mitteldom 15 angeordnet sind. Einer dieser Öffnungen 18 kann dabei komplementär zum Leerlaufkanal 5 ausgebildet und dadurch über diesen in der Art der Öffnung 14 aufgeschoben werden. Die Öffnungen 18 können dabei von einem speziellen Rand 19 eingefasst sein, aufgrund seiner Neigung bzw. Ausbildung die Strömung der Flüssigkeit 11 umlenkt (vgl. Fig. 1). Das Filtergehäuse 2 bzw. die Strömungsleitstruktur 10 können dabei aus Metall oder aus Kunststoff, insbesondere als Kunststoffspritzgussteil, ausgebildet sein.

Betrachtet man die Figur 2c, so kann man erkennen, dass die einzelnen Öffnungen 18 der Strömungsleitstruktur 10 säulenartig bzw. kanalartig nebeneinander angeordnet und mit entsprechenden dahinter gelegenen Kanalabschnitten verbunden sind, die ebenfalls die durchströmende Flüssigkeit 11 entsprechend lenken. Eine derartige Strömungsleitstruktur 10 ist dabei vorzugsweise einstückig mit dem Gehäuse 2 ausgebildet, kann aber auch als separates Bauteil ausgebildet sein.

Neben der Vergleichmäßigung der Strömung der Flüssigkeit 11 kann mit der Strömungsleitstruktur 10, insbesondere mittels der Öffnungen 18 bzw. der Rippen 17 sowie mit beispielsweise dem Mitteldom 15, insbesondere einer Axialnut 20 am Mitteldom 15 (vergleiche Figur 2a und b) die Verwendung eines autorisierten Ringfilterelements 4 erzwungen werden. In diesem Fall besitzt das Ringfilterelement 4 an beispielsweise einer Innenzarge einen entsprechenden zur Axialnut 20 passenden Ring.

Mit der Strömungsleitstruktur 11 können zudem auch der Strömungswiderstand reduziert und eine bessere Ausströmung erzielt werden. Die Anordnung bzw. Ausbildung der Strömungsleitstruktur 10, insbesondere deren Rippen 17 bzw. Öffnungen 18 und Ränder 19 kann dabei individuell auf unterschiedlichste gewollte Strömungsverhältnisse innerhalb des Filtergehäuses 2 abgestimmt bzw. ausgerichtet werden. Durch die Ausbildung der Strömungsleitstruktur 10 als separates Bauteil ist es auch möglich, herkömmliche Flüssigkeitsfilter mit einer derartigen Strömungsleitstruktur 10 nachzurüsten.

## Patentansprüche

1. Flüssigkeitsfilter (1), insbesondere ein Ölfilter zum Reinigen von Schmieröl für Verbrennungsmotoren von Kraftfahrzeugen,
- mit einem Filtergehäuse (2), das einen Aufnahmeraum (3) für ein darin eingesetztes Ringfilterelement (4) zum Filtern einer Flüssigkeit (11) enthält,
- mit einem durch Herausnehmen des Ringfilterelements (4) frei werdenden Leerlaufkanal (5), wobei an eine untere Endscheibe (6) des Ringfilterelements (4) ein parallel zur Längsachse (8) und exzentrisch abstehender Zapfen (7) angeformt ist, der bei in das Filtergehäuse (2) eingesetztem Ringfilterelement (4) dichtend in eine Öffnung des Leerlaufkanals (5) eindringt,
**dadurch gekennzeichnet,**
- **dass** im Filtergehäuse (2) im Bereich der unteren Endscheibe (6) des Ringfilterelements (4) eine Strömungsleitstruktur (10) angeordnet ist, die im Betrieb des Flüssigkeitsfilters (1) eine Druckdifferenz in demselben reduziert und eine Vergleichmäßigung der strömenden Flüssigkeit (11) bewirkt,
- **dass** die Strömungsleitstruktur (10) eine komplementär zum Leerlaufkanal (5) ausgebildete Öffnung (14) aufweist, mittels welcher sie auf den Leerlaufkanal (5) aufsteckbar ist.

2. Flüssigkeitsfilter nach Anspruch 1,
**dadurch gekennzeichnet,**
**dass** die Strömungsleitstruktur (10) einstückig mit dem Filtergehäuse (2) ausgebildet ist.

3. Flüssigkeitsfilter nach Anspruch 1,
**dadurch gekennzeichnet,**
**dass** die Strömungsleitstruktur (10) als separates Bauteil ausgebildet und in das Filtergehäuse (2) eingesetzt ist.

4. Flüssigkeitsfilter nach Anspruch 3,
**dadurch gekennzeichnet,**
**dass** die Strömungsleitstruktur (10) mit dem Filtergehäuse (2) verbunden, insbesondere verclippst, verpresst oder verschweißt, ist.

5. Flüssigkeitsfilter nach einem der Ansprüche 1 bis 4,
**dadurch gekennzeichnet,**
**dass** die Strömungsleitstruktur (10) die Rippen (17) aufweist, die sich in Radialrichtung des Filtergehäuses (2) erstrecken, wobei ein Umfangsabstand der Rippen (17) variieren kann.

6. Flüssigkeitsfilter nach einem der Ansprüche 1 bis 3,
**dadurch gekennzeichnet,**
**dass** die Strömungsleitstruktur (10) kreisförmige Öffnungen (18) aufweist, die ringförmig angeordnet sind.

7. Flüssigkeitsfilter nach einem der Ansprüche 1 bis 6,
**dadurch gekennzeichnet,**
**dass** am Filtergehäuse (2) Positionierpins (12) angeordnet sind, die in zugehörige Positionieröffnungen (13) der Strömungsleitstruktur (10) einsteckbar sind und dadurch eine vordefinierte Lage der Strömungsleitstruktur (10) im Filtergehäuse (2) erzwingen und/oder die Strömungsleistruktur (10) abstützen.

8. Flüssigkeitsfilter nach einem der Ansprüche 1 bis 7,
**dadurch gekennzeichnet,**
**dass** das Filtergehäuse (2) und/oder die Strömungsleitstruktur (10) aus Metall oder aus Kunststoff ausgebildet sind/ist.

## Claims

1. Fluid filter (1), in particular an oil filter for cleaning lubricating oil for combustion engines of motor vehicles,
- with a filter housing (2) which contains a receiving area (3) for a ring filter element (4) inserted therein for filtering a fluid (11),
- with an idle channel (5) becoming free by removing the ring filter element (4) wherein a pin (7) protruding eccentrically and parallel to the longitudinal axis (8) is formed on a lower end plate (6) of the ring filter element (4), said pin penetrates in a sealing manner into an opening of the idle channel (5) when the ring filter element (4) is inserted into the filter housing (2), **characterised in that**
- a current guiding structure (10) is arranged in the filter housing (2) in the region of the lower end plate (6) of the ring filter element (4), said current guiding structure (10), during the operation of the fluid filter (1), reduces a pressure difference in the said fluid filter and effects a balancing of the flowing fluid (11),
- the current guiding structure (10) comprises an opening (14) configured complementary to the idle channel (5) by means of which it can be attached on the idle channel (5).

2. Fluid filter according to claim 1,
**characterised in that**
the current guiding structure (10) is configured integrally with the filter housing (2).

3. Fluid filter according to claim 1,
**characterised in that**
the current guiding structure (10) is configured as a separate component and is inserted into the filter housing (2).

4. Fluid filter according to claim 3,
**characterised in that**
the current guiding structure (10) is connected to the filter housing (2), in particular clipped, pressed in or welded.

5. Fluid filter according to any one of claims 1 to 4,
**characterised in that**
the current guiding structure (10) comprises the ribs (17) which extend in the radial direction of the filter housing (2) wherein a circumferential distance of the ribs (17) can vary.

6. Fluid filter according to any one of claims 1 to 3,
**characterised in that**
the current guiding structure (10) comprises circular openings (18) which are arranged in a circle.

7. Fluid filter according to any one of claims 1 to 6,
**characterised in that**
positioning pins (12) are arranged on the filter housing (2) which can be inserted into associated positioning openings (13) of the current guiding structure (10) and as a result they force a predefined position of the current guiding structure (10) in the filter housing (2) and/or support the current guiding structure (10).

8. Fluid filter according to any one of claims 1 to 7,
**characterised in that**
the filter housing (2) and/or the current guiding structure (10) is/are configured in metal or plastic.

## Revendications

1. Filtre de liquide (1), en particulier filtre à huile destiné à l'épuration d'huile lubrifiante pour des moteurs à combustion interne de véhicules automobiles,
- avec un carter de filtre (2), qui contient un espace de logement (3) pour un élément de filtre annulaire (4) placé à l'intérieur et destiné à filtrer un liquide (11),
- avec un canal de marche à vide (5) devenant libre lorsque l'élément de filtre annulaire (4) est enlevé, un tenon (7) parallèle à l'axe longitudinal (8) et dépassant de manière excentrique étant formé au niveau d'un disque d'extrémité inférieur (6) de l'élément de filtre annulaire (4) et pénétrant de manière à assurer l'étanchéité dans une ouverture du canal de marche à vide (5) lorsque l'élément de filtre annulaire (4) est placé dans le carter de filtre (2),
**caractérisé en ce que**
- dans le carter de filtre (2), une structure de conduite de flux (10) est agencée dans la zone du disque d'extrémité inférieur (6) de l'élément de filtre annulaire (4), laquelle structure, lors du fonctionnement du filtre de liquide (1), réduit une différence de pression dans celui-ci et provoque une homogénéisation du liquide (11) qui s'écoule,
- la structure de conduite de flux (10) comporte une ouverture (14) qui est réalisée de manière complémentaire par rapport au canal de marche à vide (5) et au moyen de laquelle elle peut être insérée sur le canal de marche à vide (5).

2. Filtre de liquide selon la revendication 1,
**caractérisé en ce que**
la structure de conduite de flux (10) est réalisée d'une seule pièce avec le carter de filtre (2).

3. Filtre de liquide selon la revendication 1,
**caractérisé en ce que**
la structure de conduite de flux (10) est réalisée comme une pièce séparée et est placée dans le carter de filtre (2).

4. Filtre de liquide selon la revendication 3,
**caractérisé en ce que**
la structure de conduite de flux (10) est assemblée au carter de filtre (2), en particulier enclenchée, pressée ou soudée.

5. Filtre de liquide selon l'une des revendications 1 à 4,
**caractérisé en ce que**
la structure de conduite de flux (10) comporte des nervures (17) qui s'étendent dans la direction radiale du carter de filtre (2), une distance circonférentielle entre les nervures (17) pouvant varier.

6. Filtre de liquide selon l'une des revendications 1 à 3,
**caractérisé en ce que**
la structure de conduite de flux (10) comporte des ouvertures circulaires (18) qui sont agencées en forme d'anneau.

7. Filtre de liquide selon l'une des revendications 1 à 6,
**caractérisé en ce que**
des broches de positionnement (12) sont agencées au niveau du carter de filtre (2), lesquelles broches peuvent être insérées dans des ouvertures de positionnement (13) associées de la structure de conduite de flux (10) et imposent ainsi à la structure de conduite de flux (10) une position prédéfinie dans le carter de filtre (2) et/ou soutiennent ainsi la structure de conduite de flux (10).

8. Filtre de liquide selon l'une des revendications 1 à 7,
**caractérisé en ce que**
le carter de filtre (2) et/ou la structure de conduite de flux (10) sont réalisés en métal ou en plastique.
